# FASCICULE DE BREVET EUROPEEN

(11) **EP 0 637 820 B1**
(45) Date de publication et mention de la délivrance du brevet: **10.05.2000**
(21) Numéro de dépôt: 94440051.4
(22) Date de dépôt: 03.08.1994
(51) Int. Cl.: G10K 11/16

(54) **Panneau absorbant l'énergie acoustique dans les basses, moyennes et hautes fréquences**
Platte zur Dämpfung akustischer Energie für niedrige, mittlere und hohe Frequenzen
Panel absorbing acoustic energy in the low, medium and high frequencies

(30) Priorité: 06.08.1993 FR 9309846
(43) Date de publication de la demande: 08.02.1995
(73) Titulaire: JOHNSON CONTROLS - ROTH, 67100 Strasbourg Meinau (FR)
(72) Inventeur: Manigold, Alain, F-67310 Romanswiller (FR)
(74) Mandataire: Nuss, Pierre

(56) Documents cités:
- EP-A- 0 079 253
- EP-A- 0 364 102
- DE-A- 3 212 386
- FR-A- 2 639 386
- GB-A- 2 163 388
- US-A- 4 283 457

## Description

La présente invention concerne le domaine de la fabrication de panneaux ou garnitures d'absorption acoustique, en particulier pour la réalisation de pavillons de véhicules automobiles, et a pour objet un panneau absorbant l'énergie acoustique dans les basses, moyennes et hautes fréquences, en particulier dans les fréquences comprises entre 400 Hz et 5000 Hz.

Les panneaux plans ou moulés, en particulier utilisés comme garnitures de pavillons de véhicules automobiles, sont généralement fabriqués à partir d'une plaque de mousse de polyuréthanne à cellules ouvertes et communicantes, d'une épaisseur de 5 mm à 25 mm.

Lorsqu'ils sont soumis à l'action des ondes acoustiques, ces panneaux agissent de la manière suivante :
- dans les basses et moyennes fréquences, comprises entre 400 Hz et 1000 Hz, la mousse absorbe très faiblement les ondes acoustiques, à savoir à un taux inférieur à 10 %,
- dans les moyennes et hautes fréquences, comprises entre 1000 Hz et 5000 Hz, la mousse absorbe fortement les ondes acoustiques, c'est-à-dire à un taux compris entre 50 % et 70 %.

Cependant, pour l'obtention d'un confort acoustique optimal dans un véhicule automobile, il est nécessaire que les garnitures de pavillon absorbent les basses, les moyennes et les hautes fréquences comprises entre 400 Hz et 5000 Hz.

A cet effet, on connaît, par FR-A-2 516 034 une garniture de pavillon, dans laquelle des amincissements locaux sont prévus à différents endroits de la plaque formant la garniture, afin de ménager des cavités, dont les fonds sont doublés avec une membrane d'un matériau de moindre perméabilité aux sons.

Les ensembles constitués par les parties amincies de la garniture de pavillon, par les membranes et par les lames d'air des cavités, constituent des résonateurs, en un nombre égal au nombre de cavités, ces résonateurs absorbant uniquement les basses fréquences, dans une plage relativement faible. D'auters panneaux absorbant l'énergie acoustique sont connus des documents US-A-4 283 457 et GB-A-2 163 388.

La garniture suivant ce document FR-A-2 516 034 présente, cependant, l'inconvénient, d'une part, d'être difficilement industrialisable et, d'autre part, de ne permettre une absorption efficiente des basses et moyennes fréquences qu'aux emplacements des zones amincies, de sorte que seule une faible partie de la surface potentiellement disponible de la garniture de pavillon est utilisée.

En outre, les moyennes et hautes fréquences comprises entre 1000 Hz et 5000 Hz ne sont pas absorbées au niveau des zones amincies.

La présente invention a pour but de pallier ces inconvénients.

Elle a, en effet, pour objet un panneau absorbant l'énergie acoustique dans les basses, moyennes et hautes fréquences, en particulier dans les fréquences comprises entre 400 Hz et 5000 Hz, essentiellement constitué par une plaque de mousse semi-rigide à cellules ouvertes et communicantes et par une nappe de fibres liées ou par un matériau cellulaire souple, caractérisé en ce que l'ensemble fonctionnant selon un principe masse-ressort, la plaque de mousse semi-rigide constituant la masse de l'ensemble fonctionnant selon le principe masse-ressort et étant avantageusement une mousse de polyuréthanne semi-rigide d'une densité comprise entre 20 Kg/m³ et 50 Kg/m³, d'une épaisseur comprise entre 5 mm et 15 mm et dont la perméabilité à l'air est comprise entre 5 litres par minute et 45 litres par minute pour une éprouvette de 80 mm de diamètre, alors que la nappe de fibres liées ou en matériau cellulaire souple constitue le ressort de cet ensemble.

L'invention sera mieux comprise grâce à la description ci-après, qui se réfère à un mode de réalisation préféré, donné à titre d'exemple non limitatif et expliqué avec référence au dessin schématique annexé, dans lequel :

la figure 1 est une vue partielle en élévation latérale et en coupe d'un panneau conforme à l'invention, et
la figure 2 est un graphique représentant une courbe d'absorption phonique d'une garniture conforme à l'invention et une courbe analogue d'un panneau de type connu.

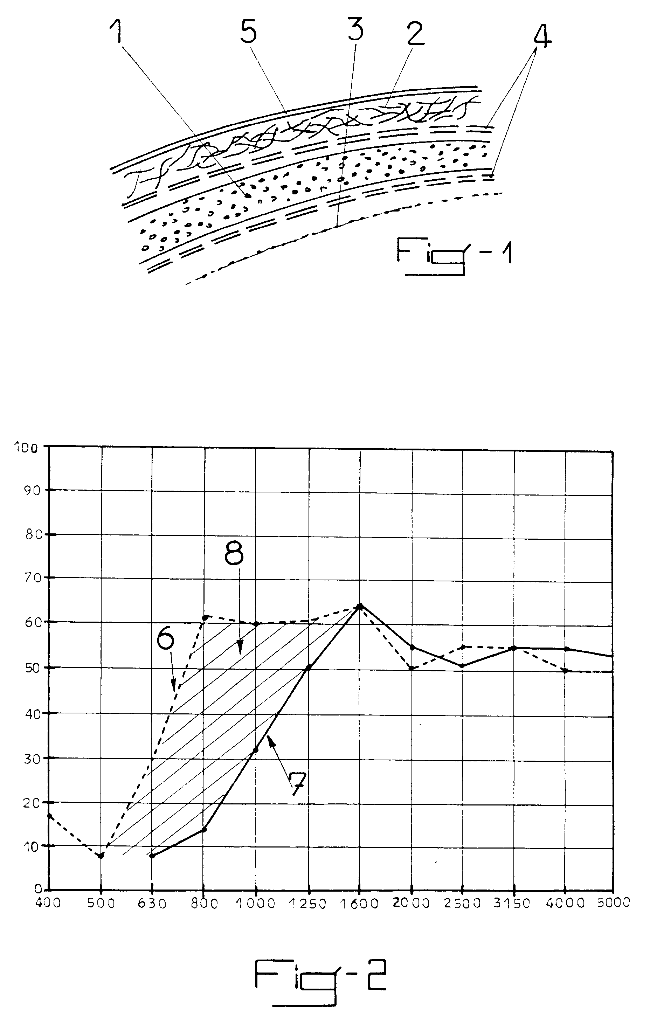

Conformément à l'invention, et comme le montre la figure 1 du dessin annexé, le panneau absorbant l'énergie acoustique dans les basses, moyennes et hautes fréquences, en particulier dans les fréquences comprises entre 400 Hz et 5000 Hz, est essentiellement constitué par une plaque 1 de mousse semi-rigide à cellules ouvertes et communicantes et par une nappe 2 de fibres liées ou par un matériau cellulaire souple, l'ensemble fonctionnant selon un principe masse-ressort.

La figure 1 du dessin annexé représente l'adaptation du panneau conforme à l'invention comme garniture de pavillon. A cet effet, le panneau est pourvu d'un revêtement d'aspect 3 pouvant être constitué par un non-tissé, un jersey ou un tissu chaîne et trame, perméable à l'air, deux voiles de fibre de verre 4 étant disposés respectivement entre le revêtement 3 et la plaque 1 de mousse semi-rigide à cellules ouvertes et communicantes et entre cette plaque 1 et la nappe 2 de fibres liées ou en matériau cellulaire souple, les différentes couches étant solidarisées entre elles au moyen d'une colle perméable à l'air, telle qu'une colle de polyuréthanne.

Dans le panneau ainsi constitué, la plaque 1 de mousse semi-rigide à cellules ouvertes et communicantes constitue la masse de l'ensemble fonctionnant selon le principe masse-ressort, alors que la nappe 2 de fibres liées ou en matériau cellulaire souple constitue le ressort de cet ensemble.

Selon une caractéristique de l'invention, la mousse constituant la plaque 1 est avantageusement une mousse de polyuréthanne semi-rigide d'une densité comprise entre 20 Kg/m³ et 50 Kg/m³, d'une épaisseur comprise entre 5 mm et 15 mm et dont la perméabilité à l'air est comprise entre 5 litres par minute et 45 litres par minute pour une éprouvette de 80 mm de diamètre.

La nappe 2 constituant le ressort et formée d'une plaque de fibres liées ou d'un matériau cellulaire souple présente avantageusement, d'une part, une raideur comprise entre 0,007 MPa et 0,05 MPa et, d'autre part, une épaisseur comprise entre 4 mm et 10 mm.

Selon une caractéristique de l'invention, la nappe 2 formant ressort peut être constituée par un matériau cellulaire en mousse de polyuréthanne souple, en mousse de latex de caoutchouc ou en mousse de caoutchouc.

Conformément à une autre caractéristique de l'invention, la nappe 2 formant ressort peut également être constituée par des fibres végétales ou animales ou synthétiques liées. De préférence, la nappe 2 est constituée par 40 % à 80 % de fibres de type polyester ayant un titre ou diamètre de fil compris entre 4 décitex et 20 décitex, ces fibres étant associées à des fibres thermo-fusibles ayant un titre compris entre 4 décitex et 20 décitex, ces dernières fibres étant associées dans une proportion comprise entre 20 % et 60 %.

La composition de la nappe 2 sera préférentiellement de 70 % de fibres polyester présentant un titre de 6,7 décitex et de 30 % de fibres thermofusibles présentant un titre de 4 décitex.

L'ensemble masse-ressort formé par la garniture conforme à l'invention agit de la manière suivante :

Dans les hautes et moyennes fréquences comprises entre 1000 Hz et 5000 Hz, la masse formée par la plaque 1 de mousse de polyuréthanne semi-rigide à cellules ouvertes et communicantes absorbe, de manière connue, 50 % à 70 % des ondes acoustiques. Cependant, du fait que sur la plaque 1 est montée la nappe 2 formant ressort, la plaque 1 formant masse se conduit, sous l'action simultanée des ondes acoustiques de fréquences comprises entre 400 Hz et 1000 Hz, d'une part, et de la nappe 2 formant ressort, d'autre part, en panneau vibrant, l'action de ces ondes acoustiques déterminant un fléchissement de la plaque 1 formant masse simultanément contrarié par la nappe 2 formant ressort.

Il en résulte que lorsque la garniture de pavillon est soumise aux basses et moyennes fréquences, c'est-à-dire aux fréquences comprises entre 400 Hz et 1000 Hz, la masse, constituée par la plaque de mousse 1, entre en vibration et transforme l'énergie acoustique en énergie mécanique, de sorte que les ondes acoustiques sont absorbées dans une proportion comprise entre 30 % et 60 %. Ainsi, la garniture de pavillon ou le panneau conforme à la présente invention permet, sur toute l'étendue de sa surface, une absorption de toutes les ondes acoustiques comprises entre 400 Hz et 5000 Hz dans une proportion allant de 30 % à 70 %.

La figure 1 du dessin annexé représente l'adaptation du panneau conforme à l'invention comme garniture de pavillon. A cet effet, le panneau est pourvu d'un revêtement d'aspect 3 pouvant être constitué par un non-tissé, un jersey ou un tissus chaîne et trame, perméable à l'air, deux voiles de fibres de verre 4 étant disposées respectivement entre le revêtement 3 et la plaque 1 de mousse semi-rigide à cellules ouvertes et communicantes et entre cette plaque 1 et la nappe 2 de fibres liées ou en matériau cellulaire souple. Ces différentes couches sont solidarisées entre elles et mises en forme au moyen d'une colle perméable à l'air, telle qu'une colle de polyuréthane et par compression de cet ensemble de couches dans un outillage poinçon-matrice de type connu monté sur une presse. Le panneau conforme à l'invention, utilisé comme garniture de pavillon, est monté contre la tôle 5 constituant le toit d'un véhicule automobile, la solidarisation de la garniture de pavillons avec la tôle 5 formant le toit pouvant être obtenue par collage, par clipage ou par tout autre moyen mécanique.

Les ondes acoustiques se dirigeant vers le panneau ou pavillon traversent le revêtement d'aspect 3 et le premier voile de fibres de verre 4. La masse formée par la plaque de mousse de polyuréthanne 1 absorbe ces ondes acoustiques dans la plage de fréquences comprise entre 1000 Hz et 5000 Hz, du fait de ses propres propriétés d'absorption. Cependant, les ondes acoustiques, dont la fréquence est comprise entre 400 Hz et 1000 Hz ne peuvent pas être absorbées par la plaque de mousse de polyuréthanne 1 formant masse et tendent de ce fait à provoquer un fléchissement de ladite plaque 1. Ce fléchissement est simultanément contrarié par la nappe 2 formant ressort, de sorte qu'il se produit une vibration de la plaque 1 formant masse et donc une transformation de l'énergie acoustique en énergie mécanique ayant pour effet d'absorber également les ondes acoustiques dont la plage de fréquences est comprise entre 400 Hz et 1000 Hz.

La figure 2 du dessin annexé est une représentation graphique faisant apparaître la courbe d'absorption phonique 6 d'un panneau formant garniture de pavillon conforme à l'invention et d'une courbe d'absorption phonique 7 d'un pavillon de type connu, en pourcentage d'absorption, en fonction de la fréquence.

Il ressort de la lecture de ce graphique un gain en absorption phonique du panneau conforme à l'invention représenté par la partie hachurée 8, ce dans le domaine de fréquences s'étendant plus particulièrement entre 400 Hz et 1000 Hz.

Grâce à l'invention, il est possible de réaliser des panneaux absorbants, pour pavillons ou autres panneaux plans ou moulés, tels que des tablettes arrières, des panneaux de portes, des ébénisteries, des habillages de coffres de véhicules automobiles, etc..., ces panneaux permettant une absorption dans une plage de fréquences s'étendant de 400 Hz à 5000 Hz.

Bien entendu, l'invention n'est pas limitée au mode de réalisation décrit et représenté au dessin annexé. Des modifications restent possibles, notamment du point de vue de la constitution des divers éléments ou par substitution d'équivalents techniques, sans sortir pour autant du domaine de protection de l'invention defini par les revendications.

## Revendications

1. Panneau absorbant l'énergie acoustique dans les basses, moyennes et hautes fréquences, en particulier dans les fréquences comprises entre 400 Hz et 5000 Hz, essentiellement constitué par une plaque (1) de mousse semi-rigide à cellules ouvertes et communicantes et par une nappe (2) de fibres liées ou par un matériau cellulaire souple, caractérisé en ce que l'ensemble fonctionne selon un principe masse-ressort, la plaque (1) de mousse semi-rigide constituant la masse de l'ensemble fonctionnant selon le principe masse-ressort et étant avantageusement une mousse de polyuréthanne semi-rigide d'une densité comprise entre 20 Kg/m³ et 50 Kg/m³, d'une épaisseur comprise entre 5 mm et 15 mm et dont la perméabilité à l'air est comprise entre 5 litres par minute et 45 titres par minute pour une éprouvette de 80 mm de diamètre, alors que la nappe (2) de fibres liées ou en matériau cellulaire souple constitue le ressort de cet ensemble.

2. Panneau, suivant la revendication 1, caractérisé en ce que la nappe (2) constituant le ressort et formée d'une plaque de fibres liées ou d'un matériau cellulaire souple présente avantageusement, d'une part, une raideur comprise entre 0,007 MPa et 0,05 MPa et, d'autre part, une épaisseur comprise entre 4 mm et 10 mm.

3. Panneau, suivant l'une quelconque des revendications 1 et 2, caractérisé en ce que la nappe (2) formant ressort est constituée par un matériau cellulaire en mousse de polyuréthanne souple, en mousse de latex de caoutchouc ou en mousse de caoutchouc.

4. Panneau, suivant l'une quelconque des revendications 1 et 2, caractérisé en ce que la nappe (2) formant ressort est constituée par des fibres végétales ou animales ou synthétiques liées.

5. Panneau, suivant l'une quelconque des revendications 1 à 4, caractérisé en ce que, de préférence, la nappe (2) est constituée par 40 % à 80 % de fibres de type polyester ayant un titre ou diamètre de fil compris entre 4 décitex et 20 décitex, ces fibres étant associées à des fibres thermofusibles ayant un titre compris entre 4 décitex et 20 décitex, ces dernières fibres étant associées dans une proportion comprise entre 20 % et 60 %.

6. Panneau, suivant la revendication 5, caractérisé en ce que la composition de la nappe (2) est préférentiellement de 70 % de fibres polyester présentant un titre de 6,7 décitex et de 30 % de fibres thermofusibles présentant un titre de 4 décitex.

## Claims

1. Panel absorbing acoustic energy in the low, medium and high frequencies, in particular in frequencies between 400 Hz and 5000 Hz, essentially consisting of a sheet (1) of semi-rigid foam with communicating open cells and of a layer (2) of bound fibres or of a flexible cellular material, characterised in that the assembly operates by a mass/spring principle, the sheet (1) of semi-rigid foam which constitutes the mass of the assembly operating by the mass/spring principle and advantageously being a semi-rigid polyurethane foam having a density between 20 kg/m³ and 50 kg/m³, a thickness between 5 mm and 15 mm and permeability to air of between 5 litres per minute and 45 litres per minute in the case of an 80 mm diameter sample, while the layer (2) of fibres which are bound or made of flexible cellular material constitutes the spring of this assembly.

2. Panel according to claim 1, characterised in that the layer (2) constituting the spring and formed by a sheet of bound fibres or a flexible cellular material advantageously has, on the one hand, a rigidity between 0.007 MPa and 0.05 MPa and, on the other hand, a thickness between 4 mm and 10 mm.

3. Panel according to any one of claims 1 and 2, characterised in that the layer (2) forming a spring consists of a cellular material made of flexible polyurethane foam, rubber latex foam or rubber foam.

4. Panel according to any one of claims 1 and 2, characterised in that the layer (2) forming a spring consists of bound vegetable or animal or synthetic fibres.

5. Panel according to any one of claims 1 to 4, characterised in that the layer (2) preferably consists of 40% to 80% of polyester type fibres having a yarn count or diameter between 4 decitex and 20 decitex, these fibres being combined with hot-melt fibres having a count between 4 decitex and 20 decitex, the latter fibres being combined in a proportion of between 20% and 60%.

6. Panel according to claim 5, characterised in that the layer (2) is preferably composed of 70% of polyester fibres having a count of 6.7 decitex and of 30% of hot-melt fibres having a count of 4 decitex.

## Patentansprüche

1. Platte zur Dämpfung der akustischen Energie in den niedrigen, mittleren und hohen Frequenzen, insbesondere in den Frequenzen zwischen 400 Hz und 5000 Hz, im wesentlichen bestehend aus einer halbstarren Schaumtafel (1) mit offenen und in Verbindung stehenden Zellen und aus einem Vlies (2) aus gebundenen Fasern oder einem weichen Zeltmaterial, dadurch gekennzeichnet, daß die Einheit nach einem Masse-Feder-Prinzip funktioniert, wobei die halbstarre Schaumtafel (1), die die Masse der Einheit bildet, nach dem Masse-Feder-Prinzip funktioniert und vorzugsweise ein halbstarrer Polyurethanschaum mit einer Dichte zwischen 20 kg/m³ und 50 kg/m³ mit einer Dicke zwischen 5 mm und 15 mm ist, dessen Luftdurchlässigkeit bei einem Reagenzglas mit 80 mm Durchmesser 5 Liter pro Minute bis 45 Liter pro Minute beträgt, während das Vlies (2) aus gebundenen Fasern oder einem weichen Zellmaterial die Feder dieser Einheit darstellt.

2. Platte nach Anspruch 1, dadurch gekennzeichnet, daß das Vlies (2), das die Feder bildet und von einer Tafel aus gebundenen Fasern oder einem weichen Zellmaterial gebildet wird, vorzugsweise einerseits eine Steifigkeit zwischen 0,007 MPa und 0,05 MPa und andererseits eine Dicke zwischen 4 mm und 10 mm aufweist.

3. Platte nach einem der Ansprüche 1 oder 2, dadurch gekennzeichnet, daß das Vlies (2), das die Feder bildet, von einem Zellmaterial aus weichem Polyurethanschaum, Latexschaum oder Kautschukschaum gebildet wird.

4. Platte nach einem der Ansprüche 1 und 2, dadurch gekennzeichnet, daß das Vlies (2), das die Feder bildet, von gebundenen pflanzlichen oder tierischen oder synthetischen Fasern gebildet wird.

5. Platte nach einem der Ansprüche 1 bis 4, dadurch gekennzeichnet, daß das Vlies (2) Vorzugsweise von 40 % bis 80 % polyesterartigen Fasern mit einer Feinheit oder einem Fadendurchmesser von 4 Decitex bis 20 Decitex besteht, wobei diese Fasern in einem Verhältnis von 20 % bis 60 % eingebunden sind.

6. Platte nach Anspruch 5, dadurch gekennzeichnet, daß die Zusammensetzung des Vlieses (2) vorzugsweise 70 % Polyesterfasern mit einer Feinheit von 6,7 Decitex und 30 % wärmeschmelzbare Fasern mit einer Feinheit von 4 Decitex ist.
